# NEW EUROPEAN PATENT SPECIFICATION

(11) **EP 1 837 367 B2**
(45) Date of publication and mention of the opposition decision: **22.11.2017**
(45) Mention of the grant of the patent: 11.05.2011
(21) Application number: 07012393.0
(22) Date of filing: 13.12.1996
(51) Int. Cl.: C08K 3/22, C09K 21/02, C01F 5/14

(54) **Magnesium hydroxide, its use and process for the preparation of resins equipped therewith**
Wärmealterungsbeständiges Flammschutzmittel, Harzzusammensetzung und geformte Gegenstände
Composition en résine ignifuge résistante à la détérioration thermique et articles moulés

(30) Priority: 19.12.1995 JP 33044895
(43) Date of publication of application: 26.09.2007
(62) Divisional of application: 96309143.4
(73) Proprietor: KYOWA CHEMICAL INDUSTRY CO., LTD., Takamatsu-shi, Kagawa 761-01 (JP)
(72) Inventor: Katsuki, Keiko, Sakaide-shi Kagawa 762 (JP); Yoshii, Makoto, Sakaide-shi Kagawa 762 (JP)
(74) Representative: J A Kemp

(56) References cited:
- G. KIRSCHBAUM, R. NYKYFORUK: "Aluminium Hydroxide and Hydroxide-New Developments and Their Applications in Polymer Compounding," 23 September 1991 (1991-09-23), , EAST BRUNSWICK, NEW JERSEY, REGIONAL TECHNICAL CONFERENCE OF THE SOCIETY OF PLASTICS ENGINEERS PAGE 89-98 , XP002542434 * page 94; table 1 * * page 95; table 2 *

## Description

### Detailed Description of the Invention

This invention relates to magnesium hydroxide particles having specific properties and their use in providing heat deterioration resistance and/or flame retardancy to a synthetic resin composition. A flame retardant composed of magnesium hydroxide particles of the invention, rarely deteriorates by heat during the thermal molding of a synthetic resin and can provide the resin with excellent heat deterioration resistance and flame retardancy when comprised in a resin composition in a predetermined proportion.

Resin compositions and molded articles comprising a relatively large amount of the magnesium hydroxide particles as a flame retardant rarely deteriorate in physical strength by the heat degradation of the resin during molding or use and hardly experience whitening due to the heat decomposition of the resin.

A requirement for flame retardant of synthetic resins is increasing and becoming exacting yearly. To meet such a requirement, a flame retardant comprising both an organic halide and antimony trioxide has been proposed and widely used. However, this flame retardant partially decomposes during molding and generates a halogen gas. Therefore, it involves various problems that it corrodes processing and molding machines, is harmful to workers, has an adverse effect on the heat resistance or weatherability of a resin and rubber, and generates a large amount of smoke containing a toxic gas when waste molded articles are burnt.

Therefore, a demand for a non-halogen flame retardant involving none of the above problems has been increasing and much attention is being paid to aluminum hydroxide particles or magnesium hydroxide particles, for example.

However, since aluminum hydroxide starts dehydration at a temperature of about 190°C and causes a foaming trouble in its molding, its molding temperature must be maintained at less than 190° C. Consequently, it has such a problem that kinds of resins to which it can be applied are limited.

On the other hand, since magnesium hydroxide particles start dehydration at about 340°C, it has such an advantage that it can be applied to almost all kinds of resins. Further, Laid-open Japanese Patent Application No. 115799/1977 (publication n°. JP 54050197 (A) teaches that a satisfactory molded article can be obtained by the development of a new method for synthesizing magnesium hydroxide particles having high crystallization.

That is, the above publication proposes magnesium hydroxide particles having specific properties, which experience a smaller structural distortion and less secondary agglomeration of particles and contain less residual water molecules and air than the conventional magnesium hydroxide particles. This publication also teaches that the magnesium hydroxide particles have good affinity with a resin such as polyolefin and produces no silver streak during molding, and a molded article having good appearance can be obtained therefrom, and that a polypropylene resin molded article having flame-retardancy which satisfies V-O in UL Standard 94 VE can be obtained.

However, although the magnesium hydroxide particles have appropriate properties as a flame-retardant molded article when filled in a resin, it has been found that they have still problems to be solved along with a recent increasing demand for properties.

That is, in order to meet V-O of UL-94 Flame Retardancy Standards with a 1/8-inch to 1/16-inch (3.175 to 1.5875 mm) thick product obtained by compounding magnesium hydroxide particles with a synthetic resin and, the magnesium hydroxide particles must be comprised in an amount of about 150 to 250 parts by weight based on 100 parts by weight of the resin. The compounding of such a relatively large amount of the magnesium hydroxide particles promotes the deterioration of a molded article by heat during molding or use and reduces the physical properties of the molded article, particularly Izod impact strength, elongation, tensile strength and the like.

An object of the present invention is, therefore, to solve the above problems and is to provide a new flame retardant composed of magnesium hydroxide particles and having excellent heat deterioration resistance and a resin composition comprising the same, which has heat deterioration resistance and flame retardancy.

To attain the above object, the inventors of the present invention have conducted extensive studies on the purity and physical properties of magnesium hydroxide particles. As a result, it has been found that both the total amount of particular metal compounds as impurities contained in the magnesium hydroxide particles and the values of average secondary particle diameter and specific surface area have an influence on the heat deterioration of a resin and that a flame retardant having excellent heat deterioration resistance can be obtained by controlling these at specific values. The present invention has been accomplished upon this finding.

Various impurities are contained mainly in the starting materials of the magnesium hydroxide particles in their production process and mixed in the magnesium hydroxide particles as a solid solution or impurities. According to studies conducted by the inventors, it has been discovered that, when trace amounts of an iron compound and a manganese compound are present, they affect the heat deterioration of a resin even when they are contained as a solid solution or an admixture.

Thus, studies conducted by the inventors have revealed that when high-purity magnesium hydroxide particles contain less than a predetermined total amount of iron compound, manganese compound, cobalt compound, chromium compound, copper compound, vanadium compound and nickel compound as impurities and have an average secondary particle diameter of 0.4 to 1.0 µm (this means that most particles are primary particles which do not undergo secondary agglomeration) and a specific surface area of not more than 10 m²/g, a resin composition and a molded article which rarely deteriorate in physical properties by heat can be obtained.

According to the present invention, the above object of the present invention can be attained by magnesium hydroxide particles having (i) an average secondary particle diameter, measured by a laser diffraction scattering method, of 0.4 to 1.0 µm, (ii) a specific surface area, measured by a BET method, of 1 to 10 m²/g and containing (iii) a total amount of iron compound, manganese compound, cobalt compound, chromium compound, copper compound, vanadium compound and nickel compound of not more than 0.01 % by weight in terms of metals.

The particles of the present invention, can be used to produce a synthetic resin composition having heat deterioration resistance and flame retardancy, which comprises (a) a synthetic resin and (b) magnesium hydroxide particles contained in a proportion of 15 to 80 % by weight based on the total weight of (a) and (b), the magnesium hydroxide particles having (i) an average secondary particle diameter, measured by laser diffraction scattering method, of 0.4 to 1.0 µm, (ii) a specific surface area, measured by a BET method, of 1 to 10 m²/g and containing (iii) a total amount of iron compound, manganese compound, cobalt compound, chromium compound, copper compound, vanadium compound and nickel compound of no more than 0.01 % by weight in terms of metals; and a molded article therefrom.

The present invention is described in detail hereinbelow.

The magnesium hydroxide particles in the present invention have an average secondary particle diameter, measured by a laser diffraction scattering method, of 0.4 to 1.0 µm and are rarely or slightly subjected to secondary agglomeration. The magnesium hydroxide particles have a specific surface area, measured by a BET method, of 1 to 10 m²/g. Further, the magnesium hydroxide particles of the present invention contain iron compound, manganese compound, cobalt compound, chromium compound, copper compound, vanadium compound and nickel compound as impurities in a total amount of not more than 0.01 % by weight, in terms of metals.

The magnesium hydroxide particles have a total content of metals (Fe + Mn + Co + Cr + Cu + V + Ni) of not more than 0.01 % by weight.

As the total content of iron compound, manganese compound, cobalt compound, chromium compound, copper compound, vanadium compound and nickel compound in the magnesium hydroxide particles increases, the thermal stability of a resin compounded with the particles becomes greatly deteriorated. However, even when the total content of the iron compound, manganese compound, cobalt compound, chromium compound, copper compound, vanadium compound and nickel compound is in the above range, the resin comprising such magnesium hydroxide particles cannot attain excellent thermal stability and be prevented deterioration in physical properties. In addition to the above, it is necessary that the above average secondary particle diameter and specific surface area satisfy the above respective ranges as well. As the average secondary particle diameter increases, the contact area between the particles and the resin decreases and thermal stability is improved. Instead, such problems occur as deterioration in mechanical strength and poor outer appearance.

As described above, when the magnesium hydroxide particles have (i) an average secondary particle diameter, (ii) a specific surface area and (iii) the total content of iron compound, manganese compound, cobalt compound, chromium compound, copper compound, vanadium compound and nickel compound within the above respective ranges, a resin composition which satisfies such properties as compatibility with a resin, dispersibility, moldability, workability, outer appearance of a molded article thereof, mechanical strength and flame retardancy can be obtained.

A method for producing the magnesium hydroxide particles in the present invention is not particularly limited as far as they satisfy the above requirements (i), (ii) and (iii). The magnesium hydroxide particles that satisfy requirements for (i) average secondary particle diameter and (ii) specific surface area can be produced by employing a method and conditions described in Laid-open Japanese Patent Application No. 115799/1977 (publication no. JP 54050197), for example. That is, the magnesium hydroxide particles can be produced by heating magnesium chloride or magnesium nitrate and an alkali substance such as alkali metal hydroxide, ammonium or magnesium oxide as starting materials in an aqueous medium under a pressurized condition (preferably 5 to 30 kg/cm²). In the above production, by selecting starting materials containing no impurities or trace amounts of impurities, especially an iron compound, manganese compound, cobalt compound, chromium compound, copper compound, vanadium compound and nickel compound, magnesium hydroxide particles satisfying the above requirement (iii) can be obtained.

If necessary, it is preferred that the magnesium chloride or magnesium nitrate and the alkali substance as starting materials be purified to reduce contents of an iron compound and a manganese compound therein.

Although the magnesium hydroxide particles of the present invention may be filled in a resin directly as a flame retardant having heat deterioration resistance, they may be used after treated with a surface treating agent. The surface treating agent is at least one selected from the group consisting of higher fatty acids, anionic surfactants, phosphoric esters, silane coupling agents, titanate coupling agents, aluminum coupling agents, and esters of polyhydric alcohols and fatty acids.

Preferred examples of the surface treating agent include higher fatty acids having 10 or more carbon atoms such as stearic acid, erucic acid, palmitic acid, lauric acid and behenic acid; alkali metal salts of the above higher fatty acids; sulfuric acid ester salts of higher alcohols such as stearyl alcohol and oleyl alcohol; anionic surfactants such as sulfuric ester salts, amide-bonded sulfuric acid ester salts, ester-bonded sulfuric acid ester salts, ester-bonded sulfonates, amide-bonded sulfonic acid salts, ether-bonded sulfonic acid salts, ether-bonded alkyl aryl sulfonic acid salts, ester-bonded alkyl aryl sulfonic acid salts and amide-bonded alkyl aryl sulfonic acid salts of polyethylene glycol ethers; acidic and alkaline metal salts and amine salts of phosphoric acid esters of mono- or di-esters or mixtures of orthophosphoric acid and oleyl alcohol or stearyl alcohol; silane coupling agents such as vinylethoxysilane, vinyl-tris(2-methoxy-ethoxy)silane, γ-methacryloxypropyltrimethoxysilane, γ-aminopropyltrimethoxysilane, β-(3,4-epoxycyclohexyl)ethyltrimethoxysilane, γ-glycidoxypropyltrimethoxysilane and γ-mercaptopropyltrimethoxysilane; titanate coupling agents such as isopropyltriisostearoyltitanate, isopropyltris(dioctylpirophosphate)titanate, isopropyltri(N-aminoethyl-aminoethyl)titanate and isopropyltridecylbenzenesulfonyltitanate; aluminum coupling agents such as acetoalkoxyaluminum diisopropyrate; esters of polyhydric alcohols and fatty acids such as glycerin monostearate and glycerine monooleate.

To effect a coating on the surfaces of the magnesium hydroxide particles with the above surface treating agent, a known wet or dry method can be used. For example, in a wet method, the surface treating agent in a liquid or emulsion form is added to the slurry of magnesium hydroxide and mechanically fully mixed at a temperature of up to about 100° C. In a dry method, the surface treating agent in a liquid, emulsion or solid form is added to magnesium hydroxide powders and mixed fully with a mixer such as a Henschel mixer thorough stirring with or without heating. The amount of the surface treating agent may be suitably selected but preferably about 10 % by weight or less based on the weight of the magnesium hydroxide particles.

Such means as water-washing, dehydration, granulation, drying, pulverization, classification and the like are suitably selected and carried out on the thus surface-treated magnesium hydroxide particles as required to obtain a final product.

The magnesium hydroxide particles of the present invention are comprised in the resin in an amount of 15 to 80 % by weight, preferably 20 to 70 % by weight, based on the total of the particles and the resin.

As the synthetic resin to be compounded with the magnesium hydroxide particles of the present invention, any synthetic resin which is generally used as a molded article is acceptable. Illustrative examples of the thermoplastic resin include polyethylene, polypropylene, ethylenepropylene copolymer, polymers and copolymers of C₂ to C₈ olefins (α-olefin) such as polybutene, poly(4-methylpentene-1) or the like, copolymers of these olefins and diene, ethylene-acrylate copolymer, polystyrene, ABS resin, AAS resin, AS resin, MBS resin, ethylene-vinyl chloride copolymer resin, ethylene-vinyl acetate copolymer resin, ethylene-vinyl chloride-vinyl acetate graft polymer resin, vinylidene chloride, polyvinyl chloride, chlorinated polyethylene, chrolinated polypropylene, vinyl chloride-propylene copolymer, vinyl acetate resin, phenoxy resin, polyacetal, polyamide, polyimide, polycarbonate, polysulfone, polyphenylene oxide, polyphenylene sulfide, polyethylene terephthalate, polybutylene terephthalate, methacrylic resin and the like.

Of the above thermoplastic resins, polyolefins and copolymers thereof which have excellent flame retardant and heat deterioration prevention effects and mechanical strength retaining properties due to the magnesium hydroxide particles are preferred, as exemplified by polypropylene-based resins such as polypropylene homopolymers and ethylene-propylene copolymers; polyethylene-based resins such as high-density polyethylene, low-density polyethylene, straight-chain low-density polyethylene, ultra low-density polyethylene, EVA (ethylene-vinyl acetate resin), EEA (ethylene-ethyl acrylate resin), EMA (ethylene-methyl acrylate copolymer resin), EAA (ethylene-acrylic acid copolymer resin) and ultra high molecular weight polyethylene; and polymers and copolymers of C₂ to C₆ olefins (α-olefin) such as polybutene and poly(4-methylpentene-1).

Further, thermosetting resins such as epoxy resin, phenol resin, melamine resin, unsaturated polyester resin, alkyd resin and urea resin and synthetic rubbers such as EPDM, butyl rubber, isoprene rubber, SBR, NIR, urethanerubber, polybutadiene rubber, acrylic rubber, silicone rubber, fluorelastmer, NBR and chlorosulfonated polyethylene are also included.

The particles of the present invention can be used in a resin composition which essentially consists of (a) the above synthetic resin and (b) the magnesium hydroxide particles as described above. The resin composition may further contain a slight amount of an auxiliary flame retardant (c). By compounding this auxiliary flame retardant (c), the amount of the magnesium hydroxide particles (b) to be contained can be reduced and a flame retarding effect can be increased.

The auxiliary flame retardant (c) is preferably red phosphorus, carbon powder or a mixture thereof. As the red phosphorus may be used red phosphorus whose surface is coated with a thermosetting resin, polyolefin, carboxylic acid polymer, titanium oxide or titanium aluminum condensation product in addition to ordinary red phosphorus. The carbon powder is selected from carbon black, activated carbon and graphite, and the carbon black may be prepared by any of oil furnace, gas furnace, channel, thermal and acetylene methods.

When the auxiliary flame retardant (c) is compounded, the proportion thereof is 0.5 to 20 % by weight, preferably 1 to 15 % by weight based on the total weight of (a) the synthetic resin and (b) the magnesium hydroxide particles.

The resin composition may be produced by mixing (a) the synthetic resin, (b) the magnesium hydroxide particles and as required, (c) the auxiliary flame retardant by known means in the respective proportions described above.

The resin composition having heat deterioration resistance and flame retardancy, provided by the present invention, may contain other commonly used additives in addition to the above components. The additives include an antioxidant, antistatic agent, pigment, foaming agent, plasticizer, filler, reinforcing agent, organic halogen flame retardant, crosslinking agent, optical stabilizer, ultraviolet absorber, lubricant or the like.

The following examples are given to further illustrate the present invention. "% "means % by weight in the examples. The proportion of the comprised antioxidant is expressed in percentage (%) based on the total weight of (a) the synthetic resin, (b) the magnesium hydroxide particles and (c) the auxiliary flame retardant.

In the following examples, (i) the average secondary particle diameter and (ii) the BET specific surface area of the magnesium hydroxide particles are values measured in accordance with measurement methods described below.

### (1) Average secondary particle diameter of magnesium hydroxide secondary particles

This is determined by measuring with the MICROTRAC Particle Size Analyzer SPA Type (manufactured by LEEDS & NORTHRUP INSTRUMENTS, LTD.).

700 mg of sample powders are added to 70 ml of water and dispersed into the water by ultrasonic wave (Model US-300 manufactured by Nissei Co., Ltd., electric current: 300 µA) for 3 minutes. 2 to 4 ml of the resulting dispersion is sampled and added to the sample container of the particle size analyzer containing 250 ml of deaerated water. After the analyzer is activated to circulate the suspension for 8 minutes, the particle size distribution is measured. The measurement is made two times and an average value of the 50 % cumulative secondary particle diameters obtained by these measurements is calculated and taken as the average secondary particle diameter of the sample.

### (2) Specific surface area measured by BET method of magnesium hydroxide particles

This is measured by a liquid nitrogen adsorption method.

### (3) Izod impact strength

This is measured in accordance with JIS K 7110.

### (4) Tensile strength

This is measured in accordance with JIS K 7113.

### (5) Flame retardancy

This is measured in accordance with the UL 94VE method. Oxygen index is measured in accordance with JIS K7201.

### (6) Analysis of heavy metals

This is conducted in accordance with the ICP-MS (Inductively coupled plasma-mass spectrometry) or atomic absorption spectrometry.

### Example 1 (properties of magnesium hydroxide particles)

The average secondary particle diameter, specific surface area and heavy metal content of various kinds of magnesium hydroxide particles to be tested were measured and shown in Table 1 below. "%" means % by weight.

**Table 1**

| Composition and properties | Sample | | | | |
|---|---|---|---|---|---|
| | A-I | A-II | B-I | B-II | B-III |
| Average secondary particle diameter (µm) | 1.2 | 0.60 | 4.63 | 2.97 | 0.8 |
| Specific surface area (m²/g) | 10.8 | 6.5 | 3.9 | 10.9 | 5.4 |
| Mg(OH)₂ (%) | 99.19 | 99.60 | 93.80 | 90.80 | 99.40 |
| CaO (%) | 0.189 | 0.01 | 1.31 | 2.21 | 0.01 |
| CO₂ (%) | 0.31 | 0.15 | 4.15 | 6.0 | 0.29 |
| Fe (%) | 0.0069 | 0.0028 | 0.188 | 0.279 | 0.225 |
| Mn (%) | 0.0013 | 0.0001 ≧ | 0.025 | 0.027 | 0.024 |
| Cu (%) | 0.0011 | 0.0011 | 0.0068 | 0.0079 | 0.007 |
| V (%) | 0.0001≧ | 0.0001≧ | 0.0001≧ | 0.0001≧ | 0.0001≧ |
| Co (%) | 0.0001≧ | 0.0001≧ | 0.0001≧ | 0.0001≧ | 0.0001≧ |
| Ni (%) | 0.0022 | 0.0009 | 0.0081 | 0.0098 | 0.008 |
| Cr (%) | 0.0001≧ | 0.0001≧ | 0.0005 | 0.0018 | 0.0003 |
| (Note) The composition of A-II is of the present invention, while the compositions of A-I, B-I, B-II and B-III are those for Comparative example. | | | | | |

### Example 2 (Evaluation of thermal stability and physical properties of resin composition)

The magnesium hydroxide particles shown in Table 1 of Example 1 were used to prepare test pieces having the following compositions.
60 % magnesium hydroxide particles (surface-treated with 3 % by weight of stearic acid)
40 % polypropylene (of an impact resistant grade with an MFI of 2 g/10 min.)
0.1 % antioxidant (Irganox 1010 of Chiba Geigy AG)
0.1 % antioxidant (DLTP of Yoshitomi Pharmaceutical Industries, Ltd.)

### (i) Preparation of test piece

Each sample of surface-treated magnesium hydroxide particles was dried at 105° C for 16 hours and further at 120° C for 2 hours to remove water adhered thereto, kneaded with a resin (polypropylene) and an antioxidant by a biaxial extruder (BT-30-S2-30-L manufactured by Plastic Kogaku Kenkyusho K.K.) at 230°C, dried again at 120°C for 2 hours and molded by an injection molding machine(FS 120S 18A SE manufactured by Nissei Jushi Kogyo K.K.) at 230°C.

Test pieces obtained by injection molding are designated as follows.
Test piece A-I: Compound of magnesium hydroxide particles of sample A-I
Tests piece A-II: Compound of magnesium hydroxide particles of sample A-II
Test piece B-I: Compound of magnesium hydroxide particles of sample B-I
Test piece B-II: Compound of magnesium hydroxide particles of sample B-II
Test piece B-III: Compound of magnesium hydroxide particles of sample B-III

### (ii) Measurement of thermal stability

Apparatus: GPHH-100 gear oven manufactured by Tabai Espec Co., Ltd. Measurement conditions: 150°C, damper aperture: 50%

A set of two test pieces is nipped at a top portion with a folded paper, fastened with a metal clip, hung on a rotary ring and taken out at intervals of a certain period of time. test piece: 1/12 inch (2.1167 mm)

Evaluation: The time passed until whitening becomes observed in the test piece is taken as an index for heat deterioration. The time passed until the weight of the test piece is reduced by 10 % at 150°C is also checked.

### (iii) Evaluation result

Evaluation results are shown in Table 2 below.

**Table 2**

| Test piece | A-I | A-II | B-I | B-II | B-III |
|---|---|---|---|---|---|
| Number of days passed before whitening | 13.5 | 27 | 6.0 | 3.5 | 4.0 |
| Izod impact (notched: kgfcm/cm) | 11 | 14.0 | 4.2 | 4.8 | 15.5 |
| Tensile strength (kgf/mm²) | 1.73 | 2.00 | 1.65 | 1.71 | 2.03 |
| 10wt% weight reduction (time) | 380 | 820 | 125 | 120 | 120 |
| Flame retardancy (UL 94VE 1/8inch (3.175 mm)) | V-O | V-O | Outside standard | Outside standard | V-O |

### Example 3

The same test as in Example 2 was made using various kinds of magnesium hydroxide particles which differ in average secondary particle diameter. The results are shown in Table 3 below. In Table 3, "total content of heavy metals (%)" indicates the total content of metals (Fe + Mn + Co + Cr + Cu + V + Ni).

**Table 3**

| Magnesium hydroxide particles | A-III | A-IV | A-V | B-IV | B-V |
|---|---|---|---|---|---|
| Average secondary particle diameter | 0.40 | 1.0 | 1.5 | 11.1 | 6.35 |
| Specific surface area | 18.0 | 8.0 | 11 | 16.0 | 59.0 |
| Content of magnesium hydroxide | 99.82 | 99.85 | 99.86 | 99.85 | 99.83 |
| Total content of heavy metals | 0.00505 | 0.00505 | 0.00570 | 0.01361 | 0.01065 |
| Number of days passed before whitening | 24 | 30 | 29 | 8.0 | 7.5 |
| Izod impact (notched: kgfcm/cm) | 10.8 | 13.6 | 10.7 | 3.7 | 3.9 |
| Tensile strength (kgf/mm²) | 1.90 | 1.95 | 1.88 | 1.61 | 1.50 |
| Flame retardancy (UL 94VE 1/8inch (3.175 mm)) | V-O | V-O | V-O | Outside standard | Outside standard |
| (Note) The composition of A-IV is of the present invention, while the compositions of A-III, A-V, B-IV and B-V are those for Comparative example. | | | | | |

### Example 4

A resin composition having the following composition was prepared.
100 parts by weight: ethylene-vinyl acetate copolymer (containing 41 % of vinyl acetate)
150 parts by weight: magnesium hydroxide particles (A-II or B-I, surface-treated with 0.25 part by weight of sodium oleate based on 100 parts by weight of the magnesium hydroxide.)
2 parts by weight: DCP (dicumyl peroxide)
1 part by weight: silane coupling agent (A-172 of Nippon Unicar Co., Ltd.)
1 part by weight: antioxidant (Irganox 1010 of Chiba Geigy AG)

### Preparation of test piece

The above starting materials were kneaded with a monoaxial kneading extruder at 120°C, pre-molded with a compression molding machine at 120°C for 5 minutes and crosslinked at 180°C for 15 minutes to obtain 2 mm- and 3 mm-thick plates.

### Measurement of thermal stability

Heat resistance: A 25 mm wide, 50 mm long test piece was obtained from the 2 mm-thick crosslinked plate and a heat resistance test was made on the test piece in the same manner as in Example 1.

Tensile strength: . A JIS 7113 No. 2 test piece was obtained to measure its tensile strength at a test speed of 200 mm/min.

### Evaluation result

The results of the above measurements are shown in Table 4 below.

**Table 4**

| Magnesium hydroxide | A-II | B-I |
|---|---|---|
| Number of days passed before whitening | 30 | 6 |
| Tensile strength (kgf/mm²) | 1.33 | 0.89 |
| Flame retardancy (oxygen index) | 38 | 36 |

### Example 5

A resin composition having the following composition was prepared.
70 %: magnesium hydroxide particles (A-II or B-III; surface-treated with 3 % by weight of stearic acid)
30 %: polypropylene (of an impact resistant grade with an MFI of 2 g/10 min)
0.1 %: antioxidant (Irganox 1010 of Chiba Geigy AG)
0.1 %: antioxidant (DLTP of Yoshitomi Pharmaceutical Industries, Ltd.)

A test piece was prepared from the above resin composition in the same manner as in Example 2 to evaluate the thermal stability and flame retardancy. The results are shown in Table 5 below.

**Table 5**

| Magnesium hydroxide particles | A-II | B-III |
|---|---|---|
| Number of days passed before whitening | 22 | 3.0 |
| Izod impact (kgfcm/cm) | 6.6 | 6.3 |
| Tensile strength (kgf/mm²) | 1.75 | 1.72 |
| 10wt% weight reduction (time) | 650 | 85 |
| Flame retardancy (UL 94VE 1/16inch (1.5875 mm)) | V-O | V-O |

### Example 6

A resin composition having the following composition was prepared.
30 %: magnesium hydroxide particles (A-II or B-III; surface-treated with 3 % by weight of stearic acid)
7 %: red phosphorus (Nova Excell 140 of Rin Kagaku Kogyo K.K.)
3 %: carbon black (manufactured by an oil furnace method, FEF)
60 %: polypropylene (of an impact resistant grade with an MFI of 2 g/10 min)
0.1 %: antioxidant (Irganox 1010 of Chiba Geigy AG)
0.1 %: antioxidant (DLTP of Yoshitomi Pharmaceutical Industries, Ltd.)

A test piece was prepared from the above resin composition in the same manner as in Example 2 to evaluate its thermal stability and flame retardancy. The results are shown in Table 6 below.

**Table 6**

| Magnesium hydroxide particles | A-II | B-III |
|---|---|---|
| Number of days passed before whitening | 33 | 7.0 |
| Izod impact (kgfcm/cm) | 12.5 | 11.8 |
| Tensile strength (kgf/mm²) | 2.17 | 2.13 |
| 10wt% weight reduction (time) | 950 | 135 |
| Flame retardancy (UL 94VE 1/8inch (3.175 mm)) | V-O | V-O |

### Example 7

The following resin compositions (1) to (3) were produced and test pieces were prepared in the same manner as in Example 2 and tested for their flame retardancy. In the case of nylon 6, kneading and injection molding are performed at 250° C. The results show that all the test pieces had flame retardancy of V-O in the UL94 VE 1/16-inch (1.5875 mm) test.

### (1)

65 %: magnesium hydroxide particles (A-II)
35 %: nylon 6 (of an injection molded grade with a specific gravity of 1.14)
0.2 %: antioxidant (Irganox 1098 of Chiba Geigy AG)

### (2)

68 %: magnesium hydroxide particles (A-II)
32 %: high-density polyethylene (of an injection molded grade with an MFI of 5.0 g/10 min)
0.1 %: antioxidant (Irganox 1010 of Chiba Geigy AG)
0.1 %: antioxidant (DLTP of Yoshitomi Parmaceutical Industries, Ltd.)

### (3)

20 %: magnesium hydroxide particles (A-II)
7 %: red phosphorus (Nova Excell 140 of Rin Kagaku Kogyo K.K.)
5 %: carbon black (manufactured by an oil furnace method, FEF)
63 %: ABS resin (of an impact resistant grade with an MFI of 25 g/10 min)
5 %: nylon 6 (of an injection molded grade with a specific gravity of 1.14)
0.2 %: antioxidant (Irganox 1010 of Chiba Geigy AG)

### Example 8

The following composition was prepared, masticated in an open roll at 70°C, and one day after, cured at 160° C for 30 minutes to obtain a 1/8-inch (3.175 mm) plate. A 1/8-inch (3.175 mm) thick test piece for the UL94 VE test was prepared from the thus obtained plate, and the UL 94 VE test was made on this test piece. The test result showed that the flame retardancy was V-1.

### Composition

100 parts by weight: EPDM rubber (ethylene/propylene ratio = 50/50 moles)
170 parts by weight: magnesium hydroxide particles (A-II)
3 parts by weight: dicumyl peroxide
0.5 part by weight: poly(2,2,4-trimethyl-1,2-dihydroquinoline)
1 part by weight: silane coupling agent (A-172 of Nippon Unicar Co., Ltd.)
1 part by weight: stearic acid
1 part by weight: sulfur

### Example 9

The following composition was prepared, kneaded with a kneader at about 30°C, and cured at 90°C for 15 minutes to obtain a 1/8-inch (3.175 mm) plate. A 1/8-inch (3.175 mm) test piece for the UL94 VE test was prepared from the thus obtained plate, and the UL 94 VE test was made on this test piece. The result showed that the flame retardancy was V-0.

### Composition

100 parts by weight: epoxy resin (specific gravity: 1.17)
100 parts by weight: magnesium hydroxide particles (A-II)
5 parts by weight: red phosphorus (Nova Excell 140 of Rin Kagaku Kogyo K.K.)
1 part by weight: carbon black (manufactured by oil furnace method, FEF)
10 part by weight: curing agent (HY951 of Chiba Geigy AG)
1 part by weight: stearic acid
0.2 part by weight: antioxidant (Irganox 1010 of Chiba Geigy AG)

According to the present invention, when a large amount of magnesium hydroxide particles are filled in a thermoplastic resin, there can be obtained a resin composition and a molded article which do not deteriorate by heat, have excellent dispersibility and are not whitened. Therefore, it is possible to provide a resin composition and a molded article which contain no halogenated flame retardant and have such advantages as excellent workability and no generation of a toxic gas when the molded article is burnt.

## Claims

1. Magnesium hydroxide particles which have (i) an average secondary particle diameter, measured by a laser diffraction scattering method, of 0.4 to 1.0 µm, and (ii) a specific surface area, measured by a BET method, of 1 to 10 m²/g, wherein the total amount of iron compound, manganese compound, cobalt compound, chromium compound, copper compound, vanadium compound and nickel compound in the magnesium hydroxide particles is not more than 0.01% by weight in terms of metals.

2. Use of magnesium particles as defined in claim 1 to provide heat deterioration resistance and/or flame retardancy to a synthetic resin composition.

3. Use according to claim 2 wherein the synthetic resin is a polyolefin or a copolymer thereof.

4. A process of producing a resin composition, which process comprises mixing (a) a synthetic resin, and (b) magnesium hydroxide particles as defined in claim 1 in a proportion of 15 to 80% by weight based on the total weight of (a) and (b).

5. A process according to claim 4, which process comprises forming the resin composition into a molded article.

## Patentansprüche

1. Magnesiumhydroxidteilchen, die (i) einen durchschnittlichen sekundären Teilchendurchmesser, gemessen mit einem Laser-Brechungs-/Streuungs-Verfahren, von 0,4 bis 1,0 µm aufweisen, und (ii) einen spezifischen Oberflächenbereich, gemessen mit einem BET-Verfahren, von 1 bis 10 m²/g aufweisen, wobei die Gesamtmenge einer Eisenverbindung, einer Manganverbindung, einer Kobaltverbindung, einer Chromverbindung, einer Kupferverbindung, einer Vanadiumverbindung und einer Nickelverbindung in den Magnesiumhydroxidteilchen nicht mehr als 0,01 Gew.-%, bezogen auf die Metalle, ist.

2. Verwendung von Magnesiumhydroxidteilchen nach Anspruch 1 zur Bereitstellung von Wärmezerstörungsresistenz und/oder Flammhemmung für eine synthetische Harzzusammensetzung.

3. Verwendung nach Anspruch 2, wobei das synthetische Harz ein Polyolefin oder ein Copolymer davon ist.

4. Verfahren zur Herstellung einer Harzzusammensetzung, wobei das Verfahren das Mischen von (a) einem synthetischen Harz und (b) Magnesiumhydroxidteilchen nach Anspruch 1 in einem Verhältnis von 15 bis 80 Gew.-% beruhend auf dem Gesamtgewicht von (a) und (b) umfasst.

5. Verfahren nach Anspruch 4, wobei das Verfahren die Formung der Harzzusammensetzung in einen geformten Gegenstand umfasst.

## Revendications

1. Particules d'hydroxyde de magnésium qui ont (i) un diamètre moyen des particules secondaires, mesuré par un procédé de dispersion par diffraction laser, de 0,4 à 1,0 µm et (ii) une superficie spécifique, mesurée par un procédé BET, de 1 à 10 m²/g, la quantité totale de composé à base de fer, de composé de manganèse, de composé de cobalt, de composé de chrome, de composé de cuivre, de composé de vanadium et de composé de nickel dans les particules d'hydroxyde de magnésium n'étant pas supérieure à 0,01 % en poids en termes de métaux.

2. Utilisation de particules de magnésium telles que définies dans la revendication 1 pour conférer une résistance à la détérioration thermique et/ou une ininflammabilité à une composition de résine synthétique.

3. Utilisation selon la revendication 2, dans laquelle la résine synthétique est une polyoléfine ou un copolymère de celle-ci.

4. Procédé de préparation d'une composition de résine, lequel procédé comprend le mélange (a) d'une résine synthétique et (b) de particules d'hydroxyde de magnésium telles que définies dans la revendication 1 dans une proportion de 15 à 80 % en poids par rapport au poids total de (a) et de (b).

5. Procédé selon la revendication 4, lequel procédé comprend l'étape consistant à mettre la composition de résine sous la forme d'un article moulé.
